# FASCICULE DE BREVET EUROPEEN

(11) **EP 1 759 600 B1**
(45) Date de publication et mention de la délivrance du brevet: **17.02.2010**
(21) Numéro de dépôt: 06370024.9
(22) Date de dépôt: 23.08.2006
(51) Int. Cl.: A23N 15/00

(54) **Procédé et installation pour le parage mécanisé des salades**
Verfahren und Vorrichtung zum Abblättern der äusseren Blätter von Salaten
Method and apparatus for trimming salads

(30) Priorité: 31.08.2005 FR 0508920
(43) Date de publication de la demande: 07.03.2007
(73) Titulaire: Bonduelle Société Anonyme, 59173 Renescure (FR)
(72) Inventeur: Bracquart, Jacques, La Woestyne, 59173 Renescure (FR)
(74) Mandataire: Duthoit, Michel Georges André

(56) Documents cités:
- EP-A- 0 419 349
- EP-A- 1 082 913
- EP-A- 1 464 236
- DE-A1- 19 802 271
- FR-A- 2 611 444
- US-A- 5 168 801

## Description

L'invention concerne un procédé et une installation pour le parage mécanisé des salades.

Le parage est une action manuelle ou automatisée qui consiste à enlever des végétaux tout élément non comestible afin d'améliorer les critères visuels et organoleptiques du végétal.

Le parage manuel des salades se fait à l'aide d'un couteau. L'opérateur commence par enlever le trognon, puis épluche la salade pour enlever les feuilles abîmées, nécrosées, et les côtes rosies, les feuilles cassées.

La salade est ensuite épointée, en regroupant les feuilles d'une main, plaquée contre un support, et en coupant les pointes de l'autre main, d'une ou plusieurs coupes nettes.

Ces diverses opérations manuelles entraînent, pour les opérateurs des douleurs à la main. Par ailleurs, les risques de coupure sont non négligeables.

On connaît du document EP-0.419.349 une machine pour l'épluchage de salades. La salade étant suspendue, une scie circulaire permet de couper la salade lorsque cette dernière est entraînée en rotation sur elle-même.

Toutefois, pour réaliser la coupe, la scie doit être entraînée à une vitesse de rotation relativement importante, ce qui est à l'origine de brûlures cellulaires au niveau des feuilles coupées. Les salades ainsi parées se dégradent alors plus rapidement que les salades coupées manuellement et ne peuvent donc être conservées aussi longtemps.

On connaît du document FR-2.611.444 une machine automatique permettant de détourer les salades maintenues, pendant la découpe, en position serrée. Cette machine comprend un dispositif support constitué d'anneaux concentriques et rigides, de diamètre dégressif en sorte d'entonnoir. Chaque anneau est constitué par deux demi-cercles. Les demi-cercles inférieurs sont assujettis à un bras, équipé d'un galet apte à coopérer avec une piste de roulement pour ouvrir ou fermer les anneaux, afin de serrer ou de relâcher les salades. Le dispositif support comprend également une butée réglable destinée à coopérer avec le pied de la salade. Un palpeur permet de détecter la position du coeur de la salade. Un dispositif de coupe constitué d'une lame animée d'un mouvement rectiligne alternatif peut être commandé pour intervenir entre n'importe quel espace compris entre les anneaux.

Le but de la présente invention est de proposer un procédé pour le parage des salades mécanisé et une installation associée, tels que revendiqués dans les revendications 1 à 25, qui permettent de pallier aux inconvénients précités, en proposant notamment un procédé mécanisé permettant de respecter la sensibilité des végétaux.

Un autre but de la présente invention est de proposer un dispositif de support de salades qui permet un maintien de la salade favorable aux opérations de coupe.

Un autre but de l'invention est de proposer un dispositif de vision ainsi qu'un dispositif de coupe mis en oeuvre dans l'installation.

D'autres buts et avantages de l'invention apparaîtront au cours de la description qui va suivre, qui n'est donnée qu'à titre indicatif, et qui n'a pas pour but de la limiter.

L'invention concerne tout d'abord un procédé pour le parage mécanisé des salades par lequel on ôte aux végétaux tout élément non comestible et on améliore les critères visuels et organoleptiques, procédé dans lequel :
- on maintient la salade par l'intermédiaire d'une bande souple contrainte au ceinturage par des moyens élastiques en l'enserrant pour regrouper ses feuilles,
- on prend et on mémorise une image de la salade en position enserrée par l'intermédiaire d'un dispositif de vision,
- on coupe l'extrémité des feuilles de la salade, en position enserrée, par l'intermédiaire d'un organe de coupe commandé en fonction des données obtenues par le dispositif de vision.

L'invention concerne également une Installation de parage de salades discontinu pour la mise en oeuvre du procédé, présentant :
- des moyens de ceinturage avec au moins une bande souple contrainte au ceinturage par des moyens élastiques pour maintenir la salade en l'enserrant pour regrouper ses feuilles,
- un dispositif de vision apte à prendre et mémoriser une image de la salade en position enserrée,
- un dispositif de coupe comportant un organe de coupe commandé par une unité logique de traitement, l'unité logique de traitement présentant des moyens de lecture des données enregistrées par le dispositif de vision.

L'invention sera mieux comprise à la lecture de la description suivante, accompagnée des dessins en annexe qui en font partie intégrante et parmi lesquels :
- la figure 1 est une vue de côté d'une installation de parage discontinu, conforme à l'invention,
- la figure 2 est une vue de dessus de l'installation de parage discontinu illustrée à la figure 1,
- la figure 3 est une vue de dessus d'une salade maintenue conformément à l'invention, en appui sur un support plan de coupe, et illustrant en pointillés les axes de coupe du procédé de parage conforme à l'invention selon un mode de réalisation,
- la figure 4 est une vue de dessus d'un dispositif de support de salades conforme à l'invention,

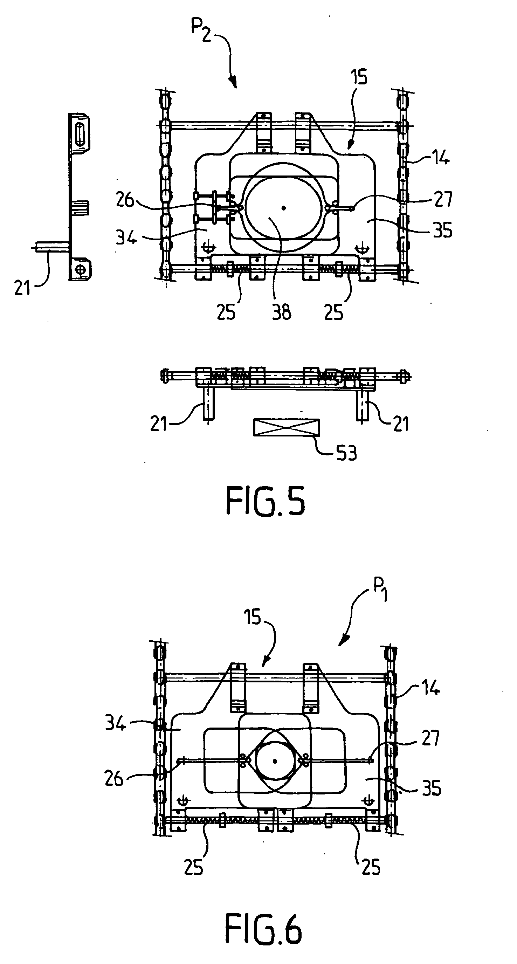

- la figure 5 illustre les vues de dessus et de côté du dispositif de support de salades tel qu'illustré à la figure 4, ledit mécanisme de serrage du dispositif étant dans une position de relâchement,
- la figure 6 est une vue de dessus du dispositif de support tel qu'illustré à la figure 5, le mécanisme de serrage étant dans une position de prise,
- la figure 7 est une vue schématique du dispositif de vision permettant d'obtenir le contour d'un végétal par ombroscopie,
- les figures 8a et 8b sont des vues de face des moyens de coupe du trognon notamment constitués par deux couteaux semi-circulaires.

L'invention concerne tout d'abord un procédé pour le parage mécanisé de salades par lequel on ôte aux végétaux tout élément non comestible et on améliore les critères visuels et organoleptiques, procédé dans lequel :
- on maintient la salade 5 en l'enserrant pour regrouper ses feuilles, sans pression excessive afin de respecter la fragilité des feuilles,
- on prend et on mémorise une image de la salade 5 en position enserrée par l'intermédiaire d'un dispositif de vision 6,
- on coupe l'extrémité des feuilles de la salade, en position enserrée, par l'intermédiaire d'un organe de coupe 71 commandé en fonction des données obtenues par le dispositif de vision.

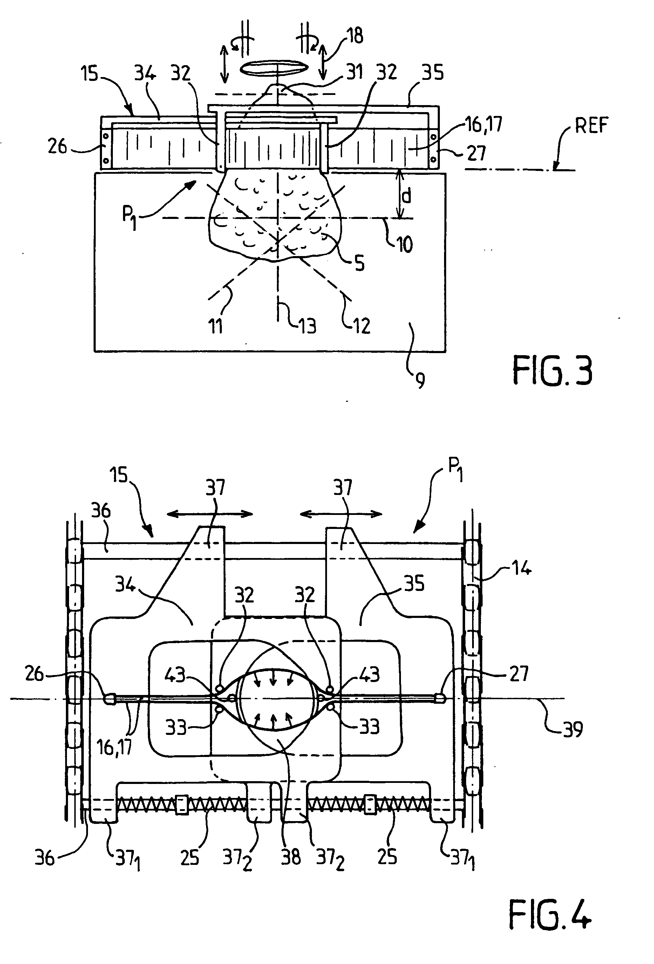

Avantageusement, on prend et on mémorise le contour de la salade obtenu par ombroscopie, la salade étant maintenue longitudinalement en position par rapport à un plan de référence REF, repéré à la figure 3, perpendiculaire audit axe longitudinal de la salade, l'axe optique du dispositif de vision 6 étant sensiblement perpendiculaire à l'axe longitudinal de la salade 5 et on détermine une côte de retrait « d » par rapport audit plan de référence.

Avantageusement, la salade est positionnée par rapport au plan de référence REF, le trognon de la salade en appui sur une surface de calage 53, notamment parallèle audit plan REF.

La distance séparant le plan de référence REF et la surface de calage 53 peut être avantageusement réglable, notamment paramétrale en fonction des dimensions des salades.

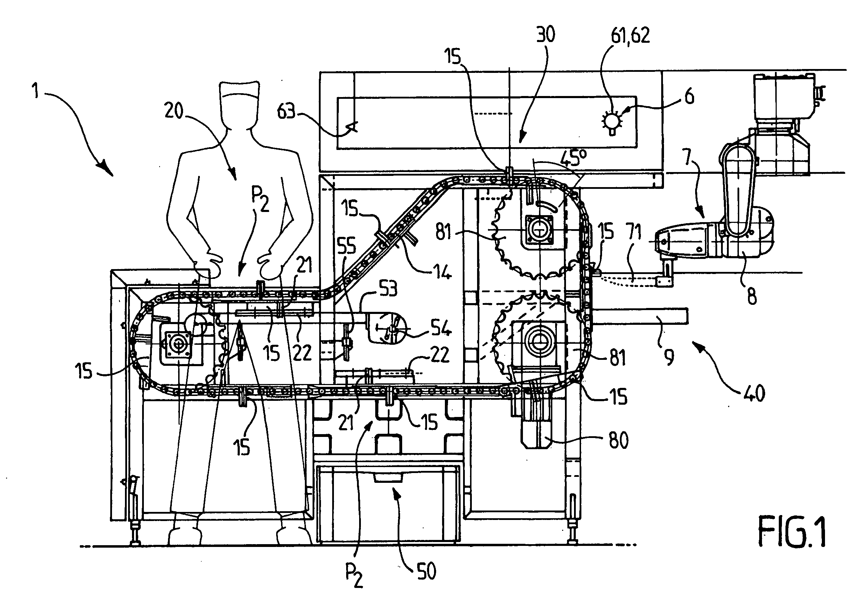

Tel qu'illustré à la figure 3 ou encore à la figure 1, on coupe la salade 5 en appui sur un support plan de coupe 9.

Plus particulièrement, tel qu'illustré à la figure 3 en pointillés, on coupe la salade en au moins trois coupes 10, 11, 12. Les coupes permettent avantageusement d'obtenir une coupe nette, favorable à une longue conservation des végétaux.

Les coupes peuvent être droites ou avantageusement légèrement courbes.

Selon un mode de réalisation illustré à la figure 3, les trois coupes sont globalement perpendiculaires à la surface du support plan de coupe 9, voir légèrement inclinées par rapport à un axe perpendiculaire audit support de coupe 9.

Une première coupe 10 est globalement orthogonale à l'axe longitudinal 13 de la salade, déterminée en fonction de la côte de retrait « d » précédemment déterminée. Les deux autres coupes 11, 12 sont globalement inclinées, selon la forme de la salade, symétriquement par rapport audit axe longitudinal de la salade 5.

Ce procédé pour le parage mécanique permet avantageusement d'aboutir aux résultats obtenus par un parage manuel tout en bénéficiant des avantages d'un procédé mécanisé.

L'invention concerne également une installation 1 de parage de salades discontinu pour la mise en oeuvre du procédé.

Selon l'invention, l'installation présente :
- des moyens de ceinturage 16 pour maintenir la salade 5 en l'enserrant pour regrouper ses feuilles,
- un dispositif de vision 6 apte à prendre et mémoriser une image de la salade 5 en position enserrée,
- un dispositif de coupe 7 comportant un organe de coupe 71 commandé par une unité logique de traitement.

L'unité logique de traitement présente des moyens de lecture des données mémorisées par le dispositif de vision 6.

Tel qu'illustré à la figure 1, selon un mode de réalisation, l'organe de coupe 71 est manipulé par un bras robotisé 8. L'unité logique de traitement permet alors la commande et le contrôle du bras robotisé afin d'assurer la coupe de la salade 5.

Telle qu'illustrée à la figure 1, l'installation peut présenter plusieurs postes de travail consécutifs, à savoir : un poste de chargement 20 de salades, un poste de captage dimensionnel 30, muni du dispositif de vision 6 apte à prendre et mémoriser une image de la salade, un poste de parage 40 présentant le dispositif de coupe 7, et un poste de déchargement 50 de salades.

Ladite installation présente en outre un dispositif de transfert, notamment une chaîne de transfert 14, équipée d'au moins un dispositif de support 15 de salades muni des moyens de ceinturage 16. Ladite chaîne de transfert 14 permet avantageusement le déplacement dudit au moins un dispositif support 15 de salades au niveau des différents postes de travail 20, 30, 40, 50.

Telle qu'illustrée à la figure 1, la chaîne de transfert suit une boucle fermée. Ladite chaîne entraîne une pluralité de dispositifs de transfert, et notamment huit. Chaque dispositif de support 15 est porté par deux barres parallèles joignant deux chaînes parallèles du dispositif de transfert.

Ladite chaîne de transfert 14 permet de disposer chaque dispositif de support 15 dans une position horizontale, notamment au niveau du poste de chargement 20, et au niveau du poste de captage dimensionnel 30.

Telle qu'illustrée à la figure 1, la chaîne de transfert 14 est avantageusement verticale au niveau du poste de parage 40 afin de disposer la salade horizontalement, notamment sur le support plan de coupe 9.

Enfin, telle qu'illustrée, la chaîne de transfert 14 permet de disposer le dispositif de support dans une position renversée au niveau du poste de déchargement 50. Les moyens de ceinturage 16 sont alors actionnés afin de relâcher la salade et provoquer sa chute dans un bac de stockage ou encore sur le tapis d'un convoyeur d'évacuation.

La chaîne de transfert 14 est avantageusement entraînée par des roues dentées entraînées par un moteur électrique 80.

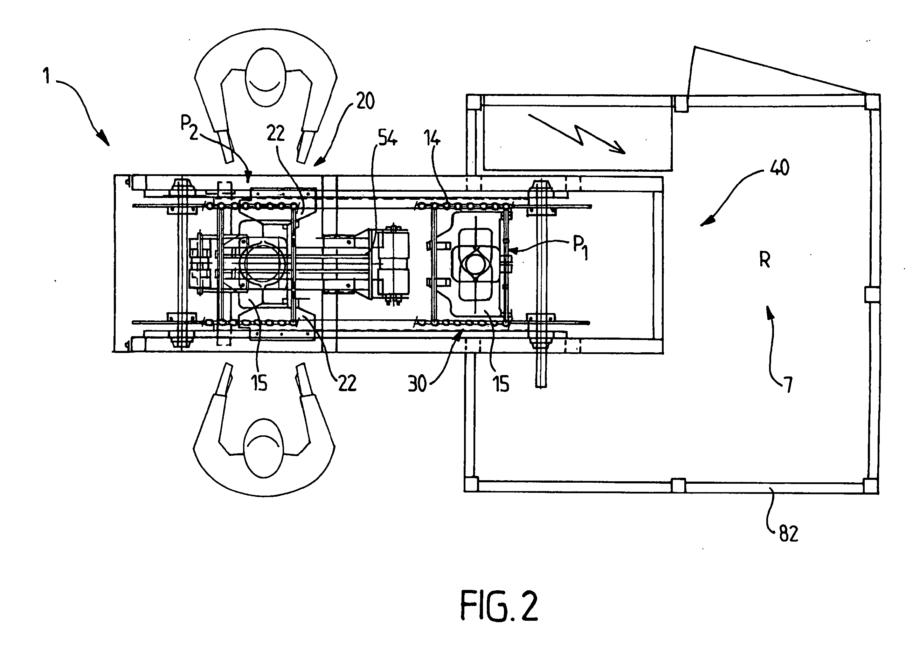

Tel qu'illustré à la figure 2, en vue de dessus, le poste de parage, et notamment le dispositif de coupe 7, est isolé dans une cage de protection 82.

Tel qu'illustré à la figure 4, le dispositif de support présente une fenêtre traversante 38 à l'intérieur de laquelle est disposée la salade 5. Le poste de chargement 20 de salade présente une surface de calage 53 disposée en dessous de la zone de passage du dispositif de support 15.

Avantageusement, la surface de calage 53 est apte à positionner longitudinalement la salade 5 par rapport au dispositif support de salade lorsque les moyens de ceinturage 16 sont dans une position de relâchement. La surface de calage 53 permet alors de positionner la salade par rapport au plan de référence REF.

Selon un mode de réalisation avantageux, la surface de calage 53 est constituée par la bande d'un convoyeur 54 synchronisé avec la chaîne de transfert 14, telle qu'illustrée aux figures 1 et 2 notamment.

Avantageusement, le positionnement de la surface de calage 53 par rapport au dispositif de support est réglable, notamment en hauteur.

Tel qu'illustré à la figure 1, la surface de calage 53, notamment le convoyeur 54, peut être positionnée en hauteur au moyen de tiges filetées 55 coopérant avec des écrous.

Le poste de parage 40 peut présenter en outre un support plan de coupe 9.

Avantageusement, la chaîne de transfert permet de déplacer chacun des dispositifs de support 15 d'un poste de travail à l'autre, et permet, notamment, de disposer une salade en appui sur le support plan de coupe 9. La chaîne est alors arrêtée permettant au dispositif de coupe 7 de réaliser la coupe des extrémités des feuilles des salades conformément au procédé.

Le support plan de coupe 9 peut être constitué par une planche de coupe. Cette dernière est avantageusement escamotable d'une position de support où la salade est apte à être disposée sensiblement en appui contre la planche, à une position d'effacement permettant à ladite chaîne de transfert 14 de déplacer la salade, et notamment le dispositif de support du poste de parage 40 en direction du poste de déchargement 50.

Avantageusement, le support plan de coupe 9 présente des moyens d'articulation permettant son basculement suivant un axe de rotation horizontale. Les déchets issus de la coupe de la salade et reposant sur le support 9 chutent alors dans des moyens de stockage tels qu'un bac.

Selon un mode de réalisation, le poste de parage 40 présente en outre des moyens de coupe 18 du trognon 31 de la salade 5.

Les moyens de coupe du trognon peuvent être constitués par deux couteaux 19, 20, semi-circulaire formant un cercle en position de repos. Les deux couteaux 19, 20 constituent une lame et une contre lame. Chacun des couteaux est articulé en rotation au niveau de l'une de ses extrémités pour réaliser la coupe du trognon.

Les moyens de coupe du trognon sont avantageusement disposés de l'autre côté du dispositif de coupe 7 par rapport à la chaîne de transfert 14. L'installation présente en outre des moyens pour actionner en translation les deux couteaux 19, 20 d'une position d'effacement jusqu'à une position de coupe où le trognon est encerclé par lesdits couteaux 19, 20.

Les moyens de coupe du trognon peuvent également être constitués par une tarière, une scie circulaire ou autres.

Cela étant, les moyens 16 de ceinturage du dispositif de support 15 des salades sont commandés par au moins un suiveur de came 21 apte à coopérer avec une came 22 de la chaîne de transfert 14 pour provoquer la fermeture ou l'ouverture desdits moyens de ceinturage 16.

Tel qu'illustré aux figures 1 et 2, les cames sont constituées par des plaques de forme générale trapézoïdale disposées de manière fixe au niveau de la chaîne de transfert 14. Avantageusement, le poste de chargement et le poste de déchargement 50 sont équipés de telles cames 22 pour provoquer l'ouverture desdits moyens de ceinturage 16 afin de permettre le chargement ou le déchargement de la salade.

Le positionnement des cames 22 peut être réglable afin d'ajuster l'ouverture et le serrage des moyens de ceinturage.

L'invention concerne également un dispositif de support 15 de salades, notamment mis en oeuvre dans l'installation de parage discontinu.

Le dispositif de support 15 présente au moins une bande souple 17 pour assurer le ceinturage de la salade afin de regrouper ses feuilles et un mécanisme de serrage apte à prendre deux positions, à savoir une première position de prise P₁ de ladite au moins une bande souple autour de la salade, et une position de relâchement P₂ de ladite au moins une bande souple. Aussi, ladite au moins une bande souple 17 permet de regrouper les feuilles de la salade.

Selon une variante avantageuse, le mécanisme de serrage présente des moyens élastiques 25 contraignant le mécanisme de serrage dans ladite position de prise de ladite au moins une bande souple.

Tels qu'illustrés à la figure 4, les moyens élastiques 25 peuvent être constitués par des ressorts en compression et disposés longitudinalement autour d'une barre 36. Selon cette variante, le mécanisme de serrage est commandé par au moins un suiveur de came 21 apte à coopérer avec une came 22 d'un dispositif de transfert pour provoquer le relâchement de la salade.

Tel qu'illustré aux figures, selon un mode de réalisation, le dispositif de support 15 de salade présente deux bandes souples 17 pour assurer le ceinturage de la salade, chacune des bandes étant assujettie à ses extrémités entre deux points d'accroche 26, 27. Avantageusement, l'un au moins des deux points d'accroche est mobile en translation suivant une direction d'étirement 39 pour permettre le serrage ou le relâchement des bandes souples 17 autour de la salade 5.

Afin d'améliorer le ceinturage, le mécanisme de serrage présente également au moins deux doigts de guidage 32, 33 aptes à se déplacer suivant la direction d'étirement 39 pour contraindre lesdites bandes souples 17, localement, en une position axiale passant par lesdits deux points d'accroche 26, 27.

Aussi, telles qu'illustrées à la figure 4, les deux bandes 17 sont assujetties à leur extrémité au niveau desdits deux points d'accroche 26, 27. Lesdits deux doigts de guidage 32, 33 sont légèrement espacés selon une direction perpendiculaire à la direction d'étirement 39. Les bandes 17 passent avantageusement entre lesdits deux doigts de guidage 32, 33.

Avantageusement, le dispositif présente en outre un troisième doigt 43 associé auxdits au moins deux doigts de guidage et disposé entre lesdits deux doigts de guidage 32, 33 et la fenêtre 38 destinée à recevoir la salade 5. Ce troisième doigt 43 permet d'éviter le pincement des feuilles de la salade entre les deux bandes 17, notamment lors du serrage. Selon une variante, le doigt 43 est complété par une portion de bande assujettie audit doigt.

Le mécanisme de serrage peut être constitué de deux éléments cadres 34, 35 superposés parallèlement l'un sur l'autre, en décalé afin de former une fenêtre traversante 38 de réception de la salade. Chacun desdits deux éléments cadres 34, 35 porte, d'une part, l'un des deux points d'accroche 26, 27 des deux bandes 17 sur l'un de ses côtés, et d'autre part, sur le côté opposé, lesdits au moins deux doigts de guidage 32, 33 pour contraindre localement les bandes souples.

Le mécanisme présente en outre des moyens 36, 37 de guidage en translation et des éléments cadre 34, 35, lesdits moyens de guidage en translation étant orientés suivant la direction d'étirement 39. Tels qu'illustrés à la figure 4, les deux éléments cadres 34, 35 sont assujettis en translation suivant la direction de deux barres de guidage 36, notamment assujetties à leur extrémité au dispositif de chaîne de transfert 14.

Selon un mode de réalisation, chaque élément cadre présente au moins une oreille supérieure 37, et au moins une oreille inférieure 37₁, 37₂, pour le passage des barres de guidage 36. Avantageusement, chaque élément cadre 34, 35 présente inférieurement deux oreilles 37₁, 37₂.

Les moyens élastiques 25, et notamment les ressorts, sont alors contraints entre l'une des oreilles 37₁ d'un élément cadre 34 et l'autre oreille 37₂ de l'autre élément cadre 35.

L'invention concerne également un dispositif de vision 6 mis en oeuvre dans l'installation de parage discontinu.

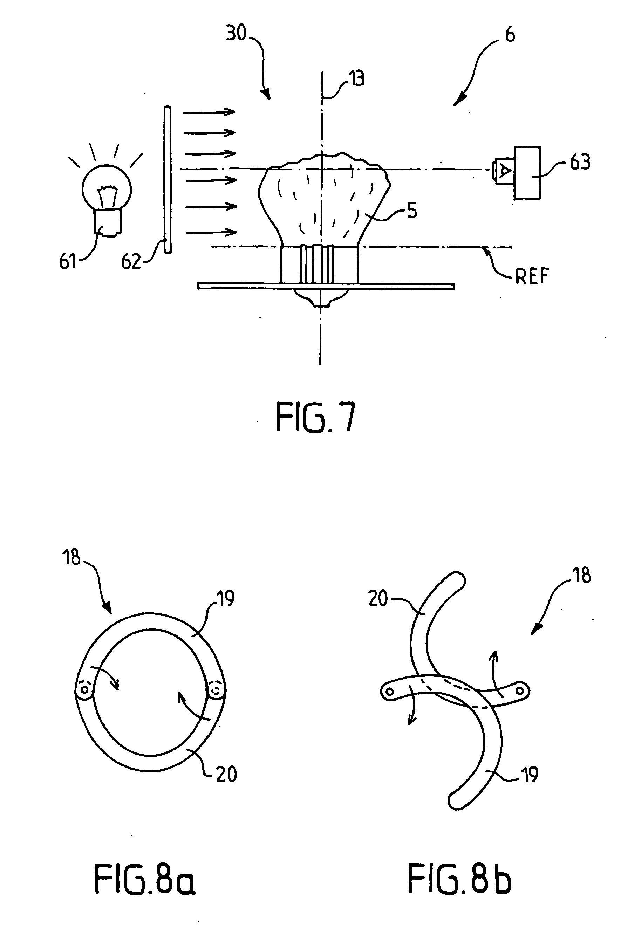

Ce dispositif de vision 6 permet la prise du contour d'un végétal, notamment d'une salade, par ombroscopie. Tel qu'illustré à la figure 1 schématiquement, et plus en détail à la figure 7, le dispositif de vision 6 présente des moyens 61, 62 pour créer une nappe lumineuse parallèle afin d'éclairer ledit végétal.

Le dispositif de vision 6 présente en outre des moyens optiques détecteurs 63, tels qu'une caméra CDD, disposée de l'autre côté du végétal.

L'axe optique des moyens optiques détecteurs 63 est sensiblement parallèle à la direction de la nappe lumineuse. Tels qu'illustrés à la figure 7, les moyens pour créer une nappe lumineuse peuvent être constitués par une source lumineuse ponctuelle 61 et une lentille colimatrice 62.

Le dispositif de vision pourra en outre être équipé d'une deuxième caméra d'axe optique sensiblement perpendiculaire à la première caméra.

L'invention concerne en outre un dispositif de coupe 7 de végétal mis en oeuvre dans l'installation 1 de parage discontinu. Le dispositif de coupe 7 comprend un organe de coupe 71, notamment manipulé par un bras robotisé 8, commandé par une unité logique de traitement.

Selon un mode de réalisation, le dispositif de coupe 7 peut en outre comporter un support plan de coupe 9.

L'organe de coupe 71 peut par exemple se présenter sous la forme d'un sabre, ou encore d'un couteau électrique dont les deux lames disposées contiguës sont animées d'un mouvement de translation oscillant en opposition de phase.

L'organe de coupe peut être également constitué par un couteau vibrant, notamment pneumatique ou encore un couteau à ultrasons.

Selon un mode de réalisation, le dispositif de coupe permet, par son bras, le changement automatique d'organes de coupe, notamment contenus dans un magasin.

Le dispositif de coupe 7 peut être également équipé de moyens d'affûtage, et notamment d'une meule tournante à aiguiser.

Avantageusement, l'affûtage ou le changement de l'organe de coupe est effectué en temps masqué lorsque la chaîne de transfert de l'installation1 de parage de salade est en mouvement.

Avantageusement, le bras robotisé 8 comporte environ six axes d'articulation pour une manipulation aisée de l'organe de coupe 71 dans les trois directions de l'espace.

Naturellement, d'autres modes de mise en oeuvre, à la portée de l'homme de l'art, auraient pu être envisagés sans pour autant sortir du cadre de l'invention.

## Revendications

1. Procédé pour le parage mécanisé de salades par lequel on ôte aux végétaux tout élément non comestible et on améliore les critères visuels et organoleptiques, procédé **caractérisé en ce que**:
- on maintient la salade (5) par l'intermédiaire d'une bande souple (17) contrainte au ceinturage par des moyens élastiques (25) en l'enserrant pour regrouper ses feuilles, sans pression excessive afin de respecter la fragilité des feuilles.
- on prend et on mémorise une Image de la salade (5) en position enserrée par l'intermédiaire d'un dispositif de vision (6),
- on coupe l'extrémité des feuilles de la salade, en position enserrée, par l'intermédiaire d'un organe de coupe (71) commandé en fonction des données obtenues par le dispositif de vision (6).

2. Procédé selon la revendication 1, dans lequel on prend et on mémorise le contour de la salade obtenu par ombroscopie, la salade étant maintenue longitudinalement en position par rapport à un plan de référence (REF) perpendiculaire audit axe longitudinal de la salade, l'axe optique du dispositif de vision étant sensiblement perpendiculaire à l'axe longitudinal de la salade, et on détermine une cote de retrait (d) par rapport audit plan de référence.

3. Procédé selon la revendication 1 ou 2, dans lequel on coupe la salade en appui sur un support plan de coupe (9),

4. Procédé selon l'une des revendications 1 à 3, dans lequel on coupe la salade en au moins trois coupes (10, 11, 12).

5. Procédé selon la revendication 4, dans lequel une première coupe (10) est globalement orthogonale à l'axe longitudinal (13) de la salade, déterminée en fonction de la cote de retrait (d), les deux autres coupes (11, 12) étant globalement inclinées, symétriquement par rapport audit axe longitudinal de la salade (5).

6. Installation (1) de parage de salade discontinu, pour la mise en oeuvre du procédé selon la revendication 1, **caractérisée en ce qu'**elle présente:
- des moyens de ceinturage (16), présentant au moins une bande souple (17) contrainte au ceinturage par des moyens élastiques (25), pour maintenir la salade en l'enserrant pour regrouper ses feuilles,
- un dispositif de vision (6) apte à prendre et mémoriser une image de la salade en position enserrée,
- un dispositif de coupe (7) comportant un organe de coupe (71) commandé par une unité logique de traitement, l'unité logique de traitement présentant des moyens de lecture des données mémorisées par le dispositif de vision.

7. Installation (1) selon la revendication 6, dans laquelle l'organe de coupe (71) est manipulé par un bras robotisé (8).

8. Installation (1) selon la revendication 6 ou 7 dans laquelle elle présente plusieurs postes de travail consécutifs, à savoir:
- un poste de chargement (20) de salades,
- un poste de captage dimensionnel (30) muni du dispositif de vision (6) apte à prendre et mémoriser une image de la salade,
- un poste de parage (40) présentant le dispositif de coupe (7)
- un poste de déchargement (50) de salades,
ladite installation présentant en outre une chaîne de transfert (14) équipée d'au moins un dispositif de support (15) de salade muni des moyens de ceinturage (16), ladite chaîne de transfert (14) permettant le déplacement dudit au moins un dispositif support (15) de salade au niveau des différents postes de travail (20, 30, 40, 50).

9. Installation selon la revendication 8, dans laquelle le dispositif de support (15) présente une fenêtre traversante (38) à l'intérieur de laquelle est disposée la salade, le poste de chargement (20) de salades présentant en outre une surface de calage (53) disposée en dessous de la zone de passage du dispositif de support (15), ladite surface de calage (53) étant apte à positionner longitudinalement la salade par rapport au dispositif support de salade lorsque les moyens de ceinturage (16) sont dans une position de relâchement.

10. Installation selon la revendication 9, dans laquelle la surface de calage (53) est constituée par la bande d'un convoyeur (54) synchronisé avec la chaîne de transfert (14).

11. Installation selon la revendication 8, dans laquelle le poste de parage (40) présentant en outre un support plan de coupe (9).

12. Installation selon la revendication 11 dans laquelle le support plan de coupe (9) est constitué par une planche de coupe, cette dernière étant escamotable d'une position de support où la salade est apte à être disposée sensiblement en appui contre la planche, à une position d'effacement permettant à la chaîne de transfert de déplacer la salade du poste de parage (40) en direction du poste de déchargement (50).

13. Installation selon la revendication 8, dans laquelle le poste de parage (40) présente en outre des moyens de coupe (18) du trognon (31) de la salade.

14. Installation selon la revendication 13, dans laquelle les moyens de coupe du trognon sont constitués par deux couteaux (19, 20) semi-circulaires formant un cercle en position de repos, les deux couteaux (19, 20) constituant une lame et une contre-lame, chacun des couteaux étant articulé en rotation au niveau de l'une des ses extrémités pour réaliser la coupe du trognon.

15. Installation selon la revendication 8, dans laquelle les moyens (16) de ceinturage du dispositif de support (15) de salade sont commandés par au moins un suiveur de came (21) apte a coopérer avec une came (22) de la chaîne de transfert (14) pour provoquer la fermeture ou l'ouverture desdits moyens de ceinturage (16) .

16. Installation de parage discontinu selon l'une des revendications 8 à 10, dans laquelle le dispositif de support (15) présente ladite au moins une bande souple (17) pour assurer le ceinturage de la salade afin de regrouper ses feuilles et un mécanisme de serrage apte à prendre deux positions, à savoir une position de prise (P1) de ladite au moins une bande souple autour de la salade et une position de relâchement (P2) de ladite au moins une bande souple.

17. Installation de parage discontinu selon la revendication 16, dans laquelle le mécanisme de serrage présente lesdits moyens élastiques (25) contraignant ledit mécanisme de serrage dans ladite position de prise (P1) de ladite au moins une bande souple (17) .

18. Installation de parage discontinu selon la revendication 17, dans laquelle le mécanisme de serrage du dispositif support (15) est commandé par au moins un suiveur de came (21) apte à coopérer avec une came (22) d'un dispositif de transfert pour provoquer le relâchement de la salade.

19. Installation de parage discontinu selon l'une des revendications 16 à 18, dans laquelle le dispositif de support (15) présente deux bandes souples (17) pour assurer le ceinturage de la salade, chacune des bandes étant assujettie à ses extrémités entre deux points d'accroche (26, 27), l'un au moins des deux points d'accroche étant mobile en translation suivant une direction d'étirement (39) pour permettre le serrage ou le relâchement des bandes souples (17) autour d'une salade (5).

20. Installation de parage discontinu selon la revendication 19, dans laquelle le mécanisme de serrage du dispositif support (15) présente également au moins deux doigts de guidage (32, 33) aptes à se déplacer suivant la direction d'étirement (39) pour contraindre lesdites deux bandes souples (17), localement, en une position axiale passant par les deux points d'accroche (26, 27).

21. Installation de parage discontinu selon la revendication 20. dans laquelle, le mécanisme est constitué par deux éléments cadres (34, 35) superposés parallèlement l'un sur l'autre, en décalé, afin de former une fenêtre traversante (38) de réception de la salade, chacun desdits deux éléments cadres (34, 35) portant, d'une part, l'un des deux points d'accroche (26, 27) des deux bandes sur l'un de ses côtés, et d'autre part, sur le côté opposé, lesdits au moins deux doigts de guidage (32, 33) pour contraindre localement les bandes souples, le mécanisme présentant en outre des moyens (36, 37) de guidage en translation des deux éléments cadres (34, 35) orientés suivant la direction d'étirement (39).

22. Installation de parage discontinu selon la revendication 6, dans laquelle le dispositif de vision (6) pour la prise du contour d'un végétal notamment d'une salade, présente des moyens (61, 62) pour créer une nappe lumineuse parallèle afin d'éclairer ledit végétal, le dispositif présentant en outre des moyens optiques détecteurs (63) tels qu'une caméra CDD, disposée de l'autre coté du végétal, d'axe optique sensiblement parallèle à la direction de la nappe lumineuse.

23. Installation de parage discontinu selon la revendication 6, dans laquelle le dispositif de coupe (7) comprend un organe de coupe (71) manipulé par un bras robotisé (8) commandé par une unité logique de traitement, le dispositif de coupe (7) comportant, en outre, un support plan de coupe (9).

24. Installation de parage discontinu selon la revendication 23, dans laquelle l'organe de coupe (71) est un sabre, un couteau électrique, un couteau vibrant pneumatique ou encore un couteau à ultrasons.

25. Installation de parage discontinu selon la revendication 23 ou 24, dans laquelle le bras robotisé (8) est un bras comportant environ six axes d'articulation.

## Claims

1. A method for mechanised trimming of lettuces through which any non-edible element is removed from the vegetables and the visual and organoleptic criteria are improved, a method **characterised in that**:
- the lettuce (5) is held via a flexible band (17) forced into an encircling motion by resilient means (25), wherein said lettuce is clamped for rearranging its leaves without excessive pressure so as to pay attention to the brittleness of the leaves,
- an image of the lettuce (5) is taken and is memorised in clamped position by means of a viewing device (6),
- the end of the leaves of the lettuce is cut, in clamped position, via a cutting member (71) controlled in relation to the data obtained using the viewing device (6).

2. A method according to claim 1, wherein the contour of the lettuce obtained by ombroscopy is taken and memorised, wherein the lettuce is maintained longitudinally in place relative to a reference plane (REF) perpendicular to said longitudinal axis of the lettuce, wherein the optical axis of the viewing device is substantially perpendicular to the longitudinal axis of the lettuce, and a retraction length (d) is determined relative to said reference plane.

3. A method according to claim 1 or 2, wherein the lettuce resting on a planar cutting support (9) is cut.

4. A method according to one of the claims 1 to 3, wherein the lettuce is cut into at least three sections (10,11,12).

5. A method according to claim 4, wherein a first cut (10) is globally orthogonal to the longitudinal axis (13) of the lettuce, determined according to the retraction length (wherein both other sections (11, 12) are globally tilted, symmetrically relative to said longitudinal axis of the lettuce (5).

6. An installation (1) for discontinuous trimming of lettuce, for implementing the method according to the claim, **characterised in that** it presents
- encircling means (16), exhibiting at least one flexible band (17) forced into an encircling motion by resilient means (25), for holding the lettuce by clamping it for rearranging its leaves,
- a viewing device (6) capable of taking and memorising an image of the lettuce in clamped position,
- a cutting device (7) including a cutting member (71) controlled by a logic processing unit, wherein the logic processing unit exhibits means for reading data memorised using the viewing device.

7. An installation (1) according to claim 6, wherein the cutting member (71) is manipulated by a robot-based arm (8).

8. An installation (1) according to claim 6 or 7, wherein it presents several consecutive workstations, i.e.:
- a loading station (20) for lettuces,
- a dimensional picking up station (30) fitted with the viewing device (6) capable of taking and memorising an image of the lettuce,
- a trimming device (40) presenting the cutting device (7)
- an unloading station (50) for lettuces,
wherein said installation presents moreover a transfer chain (14) fitted of at least one supporting device (15) for lettuce fitted with encircling means (16), said transfer chain (14) enabling displacement of said fitted of at least one supporting device (15) for lettuce at the different workstations (20, 30, 40, 50).

9. An installation according to claim 8, wherein the supporting device (15) includes a through window (38) inside which the lettuce is arranged, the loading station (20) for lettuces exhibiting moreover one wedge surface (53) arranged below the passage zone of the supporting device (15), said wedge surface (53) being capable of positioning the lettuce longitudinally relative to the lettuce supporting device when the encircling means (16) are in a release position.

10. An installation according to claim 9, wherein the wedge surface (53) is formed of the band of a conveyor (54) synchronised with the transfer chain (14).

11. An installation according to claim 8, wherein the trimming device (40) presents moreover a planar cutting support (9).

12. An installation according to claim 11, wherein the planar cutting support (9) is formed of a cutting board, the latter being retractable from a supporting position where the lettuce may be arranged substantially to rest against the board, to a clearance position enabling the transfer chain to move the lettuce, from the trimming device (40) towards the unloading station (50).

13. An installation according to claim 8, wherein the trimming device (40) presents moreover means (18) for cutting the stump (31) of the lettuce.

14. An installation according to claim 13, wherein the stump cutting means consist of two semi-circular knives (19, 20) forming a circle in rest position, wherein both knives (19, 20) form a blade and a counterblade, each of the knives being articulated rotatably at the level of one of its ends for cutting the stump.

15. An installation according to claim 18, wherein the means (16) for encircling the lettuce supporting device (15) are controlled by at least one cam follower (21) capable of co-operating with a cam (22) of the transfer chain (14) for closing or opening said encircling means (16).

16. A discontinuous trimming installation according to any of the claims 8 to 10, wherein the supporting device (15) exhibits said at least one flexible band (17) for encircling the lettuce so as to rearrange its leaves and a clamping mechanism capable of taking two positions i.e. a position (P1) for grasping said at least one flexible band around the lettuce and a position (P2) for releasing said at least one flexible band.

17. A discontinuous trimming installation according to claim 16, wherein the clamping mechanism presents said resilient means (25) forcing said clamping mechanism in said position (P1) for grasping said at least one flexible band (17).

18. A discontinuous trimming installation according to claim 17, wherein the clamping mechanism of the supporting device (15) is controlled by at least one cam follower (21) capable of co-operating with a cam (22) of a transfer device for releasing the lettuce.

19. A discontinuous trimming installation according to any of the claims 16 to 18, wherein the supporting device (15) exhibits two flexible bands (17) for encircling the lettuce, each of the bands being slaved at its ends between two catching points (26, 27), one at least of both catching points being mobile in translation along a stretching direction (39) for clamping or releasing the flexible bands (17) around a lettuce (5).

20. A discontinuous trimming installation according to claim 19, wherein the clamping mechanism of the supporting device (15) also presents at least two fingers guiding fingers (32, 33) capable of moving along the stretching direction (39) to force both said flexible bands (17), locally, into an axial position running through both catching points (28, 27).

21. A discontinuous trimming installation according to claim 20, wherein the mechanism is constituted by two frame elements (34, 35) superimposed parallel on top of one another, offset, so as to form a through window (38) for accommodating the lettuce, each of both said frame elements ( 34, 35) carries on the one hand one both catching points (26, 27) of both bands on one of its sides, and on the other hand, on the opposite side, said at least two fingers guiding fingers (32, 33) to force locally the flexible bands, the mechanism exhibiting moreover means (36, 37) for guiding in translation both frame elements (34, 35) oriented along the stretching direction (39).

22. A discontinuous trimming installation according to claim 6, wherein the viewing device (6) for grasping the contour of a vegetable in particular a lettuce, exhibits means (61, 62) for creating a parallel light layer so as to illuminate said vegetable, the device presenting moreover optical detector means (63) such as a CCD camera, arranged on the other side of the vegetable, with an optical axis substantially parallel to the direction of the light layer.

23. A discontinuous trimming installation according to claim 6, wherein the cutting device (7) includes a cutting member (71) manipulated by a robot-based arm (8) controlled by a logic processing unit, wherein the trimming device (7) presents moreover a planar cutting support (9).

24. A discontinuous trimming installation according to claim 23, wherein the cutting member (71) is a beater, an electrical knife, a pneumatic vibrating knife or still an ultrasound knife.

25. A discontinuous trimming installation according to claim 23 or 24, wherein the robot-based arm (8) is an arm containing approx. six articulation axes.

## Patentansprüche

1. Verfahren zum mechanisierten Zuschneiden von Salaten, bei dem von den Pflanzen jedes nichtessbares Element entfernt wird und die Sicht- und organoleptischen Kriterien verbessert werden, welches Verfahren **dadurch gekennzeichnet ist, dass** :
- der Salat (5) über ein durch elastische Mittel (25) zum Umfassen gezwungenes biegsames Band (17) gehalten wird, indem er umfasst wird, um seine Blätter ohne übermäßigen Druck zu gruppieren, um die Brechbarkeit seiner Blätter zu berücksichtigen,
- ein Bild des Salats (5) in umfasster Position über eine Betrachtungsvorrichtung (6) aufgenommen und gespeichert wird,
- das Ende der Blätter des Salats in umfasster Position über ein Schneideorgan (71), das abhängig von den von der Betrachtungsvorrichtung (6) erhaltenen Daten gesteuert wird, abgeschnitten wird.

2. Verfahren nach Anspruch 1, bei dem der durch Schattenaufnahme erhaltene Umriß des Salats aufgenommen und gespeichert wird, wobei der Salat in Längsrichtung bezüglich einer zu der besagten Längsachse des Salats senkrechten Bezugsebene (REF) in Position gehalten wird, wobei die optische Achse der Betrachtungsvorrichtung im wesentlichen senkrecht zu der Längsachse des Salats ist, und ein Schrumpfungsmaß (d) bezüglich der besagten Bezugsebene bestimmt wird,

3. Verfahren nach Anspruch 1 oder 2, bei dem der Salat geschnitten wird, während er auf einer flachen Schneideunterlage (9) abgestützt wird.

4. Verfahren nach einem der Ansprüche 1 bis 3, bei dem der Salat in wenigstens drei Schnitten (10, 11, 12) geschnitten wird.

5. Verfahren nach Anspruch 4, bei dem ein erster Schnitt (10) insgesamt orthogonal zur Längsachse (13) des Salats ist, was in Abhängigkeit von dem Schrumpfungsmaß (d) bestimmt wird, wobei die zwei weiteren Schnitte (11, 12) insgesamt symmetrisch zur besagten Längsachse des Salats (5) geneigt sind.

6. Anlage (1) zum unterbrochenen Zuschneiden von Salat, zur Anwendung des Verfahrens nach Anspruch 1, **dadurch gekennzeichnet, dass** sie folgendes umfasst :
- Umfassungsmittel (16), die wenigstens ein biegsames Band aufweist, das wenigstens ein durch elastische Mittel (25) zum Umfassen gezwungenes biegsames Band (17) aufweist, um den Salat zu halten, indem er umfasst wird, um seine Blätter zu gruppieren,
- eine Betrachtungsvorrichtung (6), die geeignet ist, um ein Bild des Salats in umfasster Position aufzunehmen und zu speichern,
- eine Schneidevorrichtung (7), die ein Schneideorgan (71) umfasst, das von einer logischen Verarbeitungseinheit gesteuert wird, wobei die logische Verarbeitungseinheit Mittel zum Lesen der von der Betrachtungsvorrichtung gespeicherten Daten aufweist.

7. Anlage (1) nach Anspruch 6, bei der das Schneideorgan (71) von einem roboterisierten Arm (8) gehandhabt wird.

8. Anlage (1) nach Anspruch 6 oder 7, bei der sie mehrere aufeinanderfolgende Arbeitsstationen umfasst, nämlich:
- eine Ladungsstation (20) für Salate,
- eine Abmessungserfassungsstation (30), der mit einer Betrachtungsvorrichtung (6) versehen ist, die geeignet ist, um ein Bild des Salats aufzunehmen und zu speichern,
- eine Zuschneidungsstation (40), die die Schneidevorrichtung (7) aufweist,
- eine Entladestation (50) für Salate,
wobei die besagte Anlage außerdem eine Transferkette (14) aufweist, die mit wenigstens einer mit Umfassungsmitteln (16) versehenen Salattragvorrichtung (15) ausgerüstet ist, wobei die besagte Transferkette (14) die Verschiebung der wenigstens einen Salattragvorrichtung (15) im Bereich der verschiedenen Arbeitsstationen (20, 30, 40, 50) erlaubt.

9. Anlage nach Anspruch 8, bei der die Tragvorrichtung (15) ein durgehendes Fenster (36) aufweist, in dem der Salat angeordnet ist, wobei die Salatladungsstation (20) außerdem eine underhalb des Durchgangsbereichs der Tragvorrichtung (15) angeordnete Klemmfläche (53) aufweist, wobei die besagte Klemmfläche (53) geeignet ist, um den Salat in Längsrichtung bezüglich der Salattragvorrichtung zu positionieren, wenn die Umfassungsmittel (16) sich in einer Freigabeposition befinden.

10. Anlage nach Anspruch 9, bei der die Klemmfläche (53) aus dem mit der Transferkette (14) synchronisierten Band eines Förderers (54) besteht.

11. Anlage nach Anspruch 8, bei der die Zurichtungsstation (40) außerdem eine flache Schneideunterlage (9) aufweist.

12. Anlage nach Anspruch 11, bei der die flache Schneideunterlage (9) aus einem Schneidebrett besteht, wobei dieses letzte von einer Abstützungsposition, in der der Salat geeignet ist, im wesentlichen an dem Brett anliegend angeordnet zu werden, in eine eingezogene Position einziehbar ist, die es der Transferkette erlaubt, den Salat von der Zuschneidungsstation (40) in Richtung auf die Entladungsstation (50) zu bewegen.

13. Anlage nach Anspruch 8, bei der die Zuschneidungsstation (40) außerdem Mittel zum Abschneiden (18) des Strunkes (31) des Salats aufweist.

14. Anlage nach Anspruch 13, bei der die Mittel zum Abschneiden des Strunkes aus zwei halbkreisförmigen Messern (19, 20) bestehen, die in Ruhelage einen Kreis bilden, wobei die beide Messer (19, 20) eine Klinge und eine Gegenklinge bilden, wobei jedes der Messer im Bereich von einem seiner Enden drehbar gelenkig ist, um das Abschneiden des Strunkes durchzuführen.

15. Anlage nach Anspruch 8, bei der die Umfassungsmittel (16) der Salattragvorrichtung (15) durch wenigstens einen Nockenmitläufer (21) gesteuert werden, der geeignet ist, mit einem Nocken (22) der Transferkette (14) zusammenzuwirken, um das Schießen oder Öffnen der besagten Umfassungsmittel (16) zu bewirken.

16. Anlage zum diskontinuierlichen Zuschneiden nach einem der Ansprüche 8 bis 10, bei der die Tragvorrichtung (15) das besagte wenigstens eine biegsame Band (17), um das Umfassen des Salats zu sichern, um dessen Blätter zu gruppieren, und einen Klemmmechanismus, der geeignet ist, zwei Positionen anzunehmen, aufweist, nämlich eine Position zum Fassen (P1) des wenigstens einen biegsamen Bandes um den Salat und eine Position zum Lösen (P2) des besagten wenigstens einen biegsamen Bandes.

17. Anlage zum diskontinuierlichen Zuschneiden nach Anspruch 16, bei der der Klemmmechanismus die besagten elastischen Mittel (25) aufweist, die den besagten Klemmmechanismus in die besagte Position zum Fassen (P1) des besagten wenigstens einen biegsamen Bandes (17) zwingt.

18. Anlage zum diskontinuierlichen Zuschneiden nach Anspruch 17, bei der der Klemmmechanismus der Tragvorrichtung (15) durch wenigstens einen Nockenmitläufer (21) gesteuert wird, der geeignet ist, mit einem Nocken (22) einer Transfervorrichtung zusammenzuwirken, um das Lösen des Salats zu bewirken.

19. Anlage zum diskontinuierlichen Zuschneiden nach einem der Ansprüche 16 bis 18, bei der die Tragvorrichtung (15) zwei biegsame Bänder (17) aufweist, um das Umfassen des Salats zu sichern, wobei jedes der Bänder an seinen Enden zwischen zwei Anhakpunkten (26, 27) befestigt ist, wobei wenigstens einer der zwei Anhakpunkte in einer Ausdehnungsrichtung (39) translationsbeweglich sind, um das Klemmen oder Lösen der biegsamen Bänder (17) um einen Salat (5) herum zu ermöglichen.

20. Anlage zum diskontinuierlichen Zuschneiden nach Anspruch 19, bei der der Klemmmechanismus der Tragvorrichtung (15) auch wenigstens zwei Führungsfinger (32, 33) aufweist, die geeignet sind, sich in einer Streckrichtung (39) zu bewegen, um die besagten zwei biegsamen Bänder (17) örtlich in eine axiale Position zu zwingen, die durch die zwei Anhakpunkte (26, 27) geht.

21. Anlage zum diskontinuierlichen Zuschneiden nach Anspruch 20, bei der der Mechanismus aus zwei parallel zu einander, versetzt aufeinander liegenden Rahmenelementen (34, 35) besteht, um ein durchgehendes Fenster (38) zum Aufnehmen des Salats zu bilden, wobei jedes der besagten zwei Rahmenelemente (34, 35), einerseits, einen der zwei Anhakpunkte (26, 27) der zwei Bänder an einer seiner Seiten und, andererseits, auf seiner gegenüberliegenden Seite, die besagten wenigstens zwei Führungsfinger (32, 33) trägt, um die biegsamen Bänder örtlich zu zwingen, wobei der Mechanismus außerdem Mittel (36,37) zum Führen in Translationsbewegung der zwei in Streckrichtung (39) gerichteten Rahmenelemente (34, 35) aufweist.

22. Anlage zum diskontinuierlichen Zuschneiden nach Anspruch 6, bei der die Betrachtungsvorrichtung (6) zum Aufnehmen des Umrisses einer Pflanze, nämlich eines Salats, Mittel (61, 62) zum Bilden einer parallelen Leuchtfläche, um die besagte Pflanze zu beleuchten, aufweist, wobei außerdem optische Detektionsmittel (63), wie eine CDD-Kamera, die an der anderen Seite der Pflanze angeordnet ist und deren optische Achse im wesentlichen parallel zur Leuchtfiäche ist, aufweist.

23. Anlage zum diskontinuierlichen Zuschneiden nach Anspruch 6, bei der die Schneidevorrichtung (7) ein Schneideorgan (71) umfasst, der durch einen von einer logischen Verarbeitungseinheit gesteuerten robotorisierten Arm (8) gehandhabt wird, wobei die Schneidevorrichtung (7) außerdem eine flache Schneideunterlage (9) umfasst.

24. Anlage zum diskontinuierlichen Zuschneiden nach Anspruch 23, bei der das Schneideorgan (71) ein Säbel, ein elektrisches Messer, ein pneumatisches Vibriermesser oder auch ein Ultraschallmesser ist.

25. Anlage zum diskontinuierlichen Zuschneiden nach Anspruch 23 oder 24, bei der der robotorisierte Arm (8) ein Arm ist, der etwa sechs Gelenkachsen umfasst.
